# EUROPEAN PATENT SPECIFICATION

(11) **EP 4 095 579 B1**
(45) Date of publication and mention of the grant of the patent: **19.11.2025**
(21) Application number: 22174104.4
(22) Date of filing: 18.05.2022
(51) Int. Cl.: G02B 6/44, G02B 6/46, H02G 3/22, H02G 3/10

(54) **A KIT FOR INSTALLING ONE OR MORE CABLES THROUGH A BUILDING WALL, AND A METHOD FOR CARRYING OUT THE INSTALLATION USING THE KIT**
KIT ZUR INSTALLATION EINES ODER MEHRERER KABEL DURCH EINE GEBÄUDEWAND UND VERFAHREN ZUR DURCHFÜHRUNG DER INSTALLATION UNTER VERWENDUNG DES KITS
KIT D'INSTALLATION D'UN OU PLUSIEURS CÂBLES À TRAVERS UNE PAROI DE BÂTIMENT, ET PROCÉDÉ POUR EFFECTUER L'INSTALLATION À L'AIDE DU KIT

(30) Priority: 28.05.2021 DK PA202170279
(43) Date of publication of application: 30.11.2022
(73) Proprietor: DKT A/S, 4060 Kirke Såby (DK)
(72) Inventor: KRISTIANSEN, Michael Skjerning, 4140 Borup (DK); BROSZKA, Jesper, 4340 Tølløse (DK)
(74) Representative: Zacco Denmark A/S

(56) References cited:
- EP-A1- 3 719 553
- WO-A1-96/07227
- FUTURE READY SOLUTIONS: "Demarc Wiring with Fiber Optic Cable", 2020, Bonita Springs, US, pages 1 - 1, XP055969552, Retrieved from the Internet <URL:www.futurereadysolutions.com> [retrieved on 20221010]

## Description

The present invention concerns a kit for installing one or more cables, such as optical fiber cables, through a building wall, with cables of the kit to extend between an indoor termination module of the kit, such as an indoor optical termination module, and an outdoor connector module of the kit, such as an outdoor optical connector module.

The indoor termination module is configured for being mounted onto an inside surface of the wall and the outdoor connector module is configured for being mounted opposite the indoor termination module on the outside surface of the wall.

From the outdoor connector module will other cables typically connect to a connection node, such as an optical connection node, outside the building. The optical connection node may be eg. an optical fiber distribution hub with splitters that generate individual optical fibers in respective cables, by some referred to as "subscriber cables", with the cables, or groups of cables, to extend from the hub to respective outdoor connector modules.

The invention also relates to a method for installing the one or more cables, using the kit.

In the following text the indoor termination module and the outdoor connector module will also be referred to as first and second components, respectively, of the kit of the invention.

WO2020/011334 relates to an optical installation kit including a storage packaging with a subscriber cable that is in a folded figure eight/8 arrangement.

The subscriber cable is pulled out from the packaging up to an optical connection node. EP2264502 discloses a similar installation kit. WO2009/032886 and WO2009/048680 disclose installation kits wherein the indoor optical termination module has a spool accommodating a long length of a subscriber cable which is paid out by rotating either the indoor optical termination module casing which is rotationally secured to the building wall, or a spool inside the casing.

EP3719553A1 discloses a device for passing a cable through a wall bore leading through a building wall, with an outer clamping body covering the wall bore on the outside of the building, and an inner clamping body covering the wall bore on the inside of the building through which the cable exits. The cable may be surrounded by a tubular speedpipe that extends through the clamping bodies and the wall bore.

The object of the present invention is inter alia to provide a kit allowing for a simple installation of cables that are to pass through a hole formed in a building wall adjacent the planned location of the indoor termination module, to the planned location of the outdoor connector module; with the invention the risk of damaging the cables during the installation is highly reduced.

### Summary

In view of this object, a kit is provided as defined in claim 1 whereby the indoor termination module is configured for being rotatably connected to a tube, referred to herein as a third component of the kit, which tube is for running through the hole in the wall, and where the indoor and outdoor termination modules are each configured for being connected to a respective cable end. A single axis of rotation, parallel with the surface onto the indoor termination module is mounted, of the tube relative to the indoor termination module may be defined on connecting the indoor termination module to the tube. A single axis of rotation, parallel with the surface onto the outdoor termination module is mounted, of the tube relative to the outdoor termination module may be defined on connecting the outdoor termination module to the tube. In an embodiment the rotatable connection is a ball and socket joint providing an increased freedom of rotation between the indoor termination module and the tube.

By the aforementioned connection, the tube may be turned relative to the indoor termination module, to accommodate for the angle to the horizontal at which the hole has been formed/drilled.

In an embodiment, the or each cable of the kit has already been connected to a corresponding terminal connector inside the termination module casing in a ready-for-use fashion during fabrication of the kit, whereby the time required for a technician installing the kit to be physically present inside the building is largely reduced. This advantage is of particular importance where the cable is an optical fiber cable.

After installation of the kit a user may in a conventional manner connect an indoor device to the indoor termination module via a connectorized user cable connecting with the terminal connector inside the indoor termination module casing.

Preferred embodiments arte defined in the dependent claims.

A method of installing in a quick and reliable manner a cable through a building wall using the kit is also disclosed and claimed herein.

### Brief description of the drawings

Fig. 1a shows the components of a kit according to the present invention,
Fig. 1b shows the kit mounted to a wall,
Fig. 2a shows the first component of the kit,
Fig. 2b is a view similar to fig. 2a but showing the first component with e rear part thereof not being visible,
Fig. 2c shows a first step during the installation of the kit,
Figs. 3a-3c show further steps taken during installation of the kit,
Fig. 3d is a schematic illustration of the general principle used for connecting the first component with a third component of the kit,
Figs. 3e-f show details of the inner side of a rear part of the casing of the embodiment of the first component shown in fig. 2a, before and after connection with the third component, respectively,
Figs. 4a-d show further steps taken during installation of the kit,
Fig. 4e is a schematic view similar to fig. 3d showing the general principle used for connecting a second component of the kit with the third component of the kit,
Fig. 4f shows a final step during installation of the kit, and
Fig. 5 shows a tool that may be used for drilling a hole through the wall.

### Detailed description

The invention will now be explained in more detail below by reference to preferred embodiments. The cables referred to may preferably be optical fiber cables for data transfer, the kit being highly suitable for providing FTTH ("Fiber To The Home") network access.

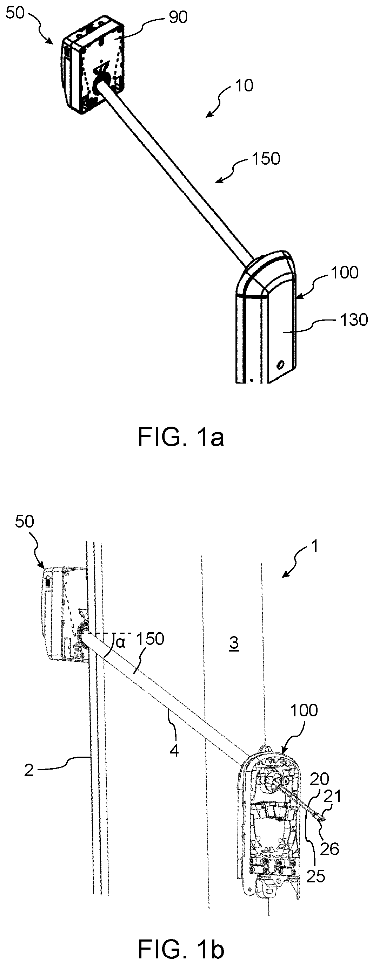

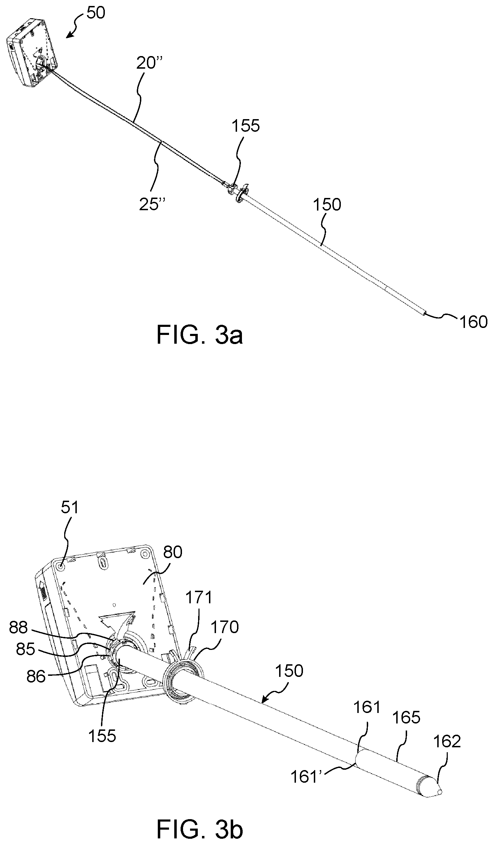

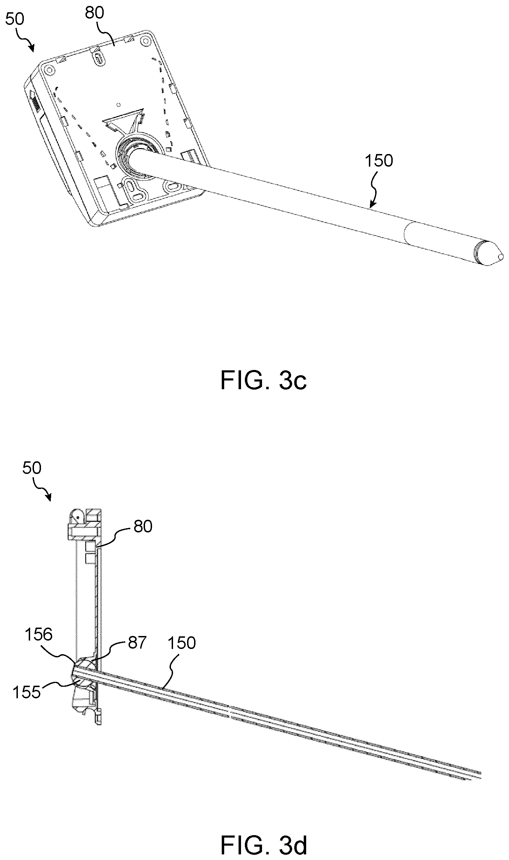

Figs. 1a and 1b show a kit 10 according to the present invention, useful for installing one or more cables 20, 25 in a building, wherein the one or more cables 20, 25 are to extend in a hole 4 already drilled through a wall 1 of the building, from a first component/indoor termination module 50 of the kit 10 to a second component/outdoor connector module 100 of the kit 10, running alongside each other inside a third, hollow tubular component 150 of the kit 10. The third component 150, which has an open first end 155 and a second end 160, as seen best in fig. 3a, may preferably be a length of a plastic tube, and may exhibit a degree of flexibility to allow it to bend slightly. The open first end 155 and the second end 160 are configured for being received by the first component 50 and the second component 100, respectively, during the installation of the kit 10.

The first and second components 50, 100 are configured for being mounted opposite or near opposite each other on a respective surface 2, 3 of the wall 1, see fig. 1b, normally with a first one of the two surfaces being an inside surface 2 of the building wall 1 and with the second one of the two surfaces being an outside surface 3 facing the outside of the building.

In the shown embodiment two parallel cables 20, 25 are installed.

The kit 10 of the invention may be presented to a technician installing the kit 10 with the aforementioned three components 50, 100, 150 packaged as separate components.

As will be understood from the following, during and after the installation the third component 150 provides a protective enclosure for the length of the cable(s) passing through the hole 4. At its second end 160 the third component 150 preferably has a removable end closure defined by a plug 162, see fig. 3b. A portion 165 (see fig. 3b) of a selected length of the third component 150 may be readily removed from the rest of the third component 150, for the purpose described further below.

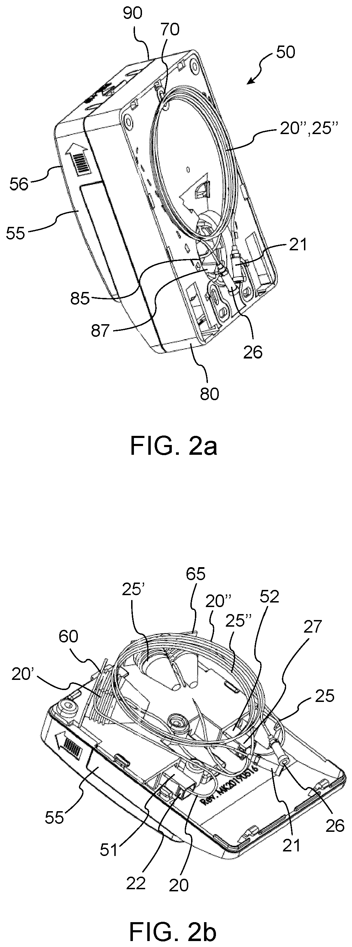

As shown in figs 2a and 2b each cable 20, 25 forms at the outset a part of the first component 50 and preferably has at its first end a connector 22, 27 that is connected to, or ready to be connected to, a corresponding terminal connector 51, 52 inside a casing 90 of the first component 50. Depending on the internal diameter of the third component 150 each cable 20, 25 may as shown have a further connector 21, 26 already mounted to its second end. The further connector(s) 21, 26 may be configured to be readily connectable to a terminal connector inside a casing 130 of the second component 100 on completing the installation, as shown in fig. 1b.

Alternatively, any small-size protective sleeve arranged on the second end of the cable 20, 25 may on completing the installation be removed to allow for the further connector 21, 26 to be then mounted to the second end of the cable 20, 25. This may allow the internal dimension of the tubular third component 150, and hence of the hole 4, to be smaller, simplifying the drilling of the hole through the wall 1.

Fig. 2a shows the casing 90 of the first component 50 as comprising a front part 55 releasably connected to a rear part 80. A front side 56 of the front part 55 has connector sockets (now shown) whereby a user may connect devices to the terminal connectors 51, 52 to obtain network access via the cables 20, 25.

As shown in fig. 2b, wherein the rear part 80 is not shown for simplicity, the front part 55 has first fixtures 60, 65 for releasably holding a first length 20', 25' of each of the cables 20, 25 looped in a respective figure eight/8 configuration that allows this first length 20', 25' to be drawn out from the inside of the casing 90 without generating torsion, as discussed generally in WO2020/011334. The first component 50 also has second fixtures 70, in a simple version in the form of a releasable adhesive tape, for releasably holding on to a second length 20", 25" of each of the cables 20, 25 that is wound up in a circular arrangement and placed against the outer face of the rear part 80, as shown in fig. 2a. The cables 20, 25 extend from the inside of the casing 90 via an opening 85 formed in the rear part 80 whereby the second end of the cables 20, 25 as well as the second cable length(s) 20", 25" are directly accessible from outside the casing 90 without any need to separate the rear part 80 from the front part 55.

As may be understood, by releasing the second length 20", 25" of the cables 20, 25 a technician may first pay out the second length 20", 25" from the first component 50. A further manual pull applied on the second length 20", 25" of each cable 20, 25 will result in the first length 20', 25' being gradually pulled out from the inside of the casing 90 via the opening 85 and without generating torsion.

As a first step of the installation the technician will drill the hole 4 through the wall 1, from inside or outside the building. Normally this is done such that the hole 4 extends at a given angle α selected in a range of eg. 10°-30° to the horizontal, to an end of the hole 4 on the outside surface 3 which is at a lower horizontal level than the other end of the hole 4 located on the inside surface 2, to prevent inflow of rain water into the hole 4. An example of a finished installation where the angle α is about 45° is shown in fig. 1b.

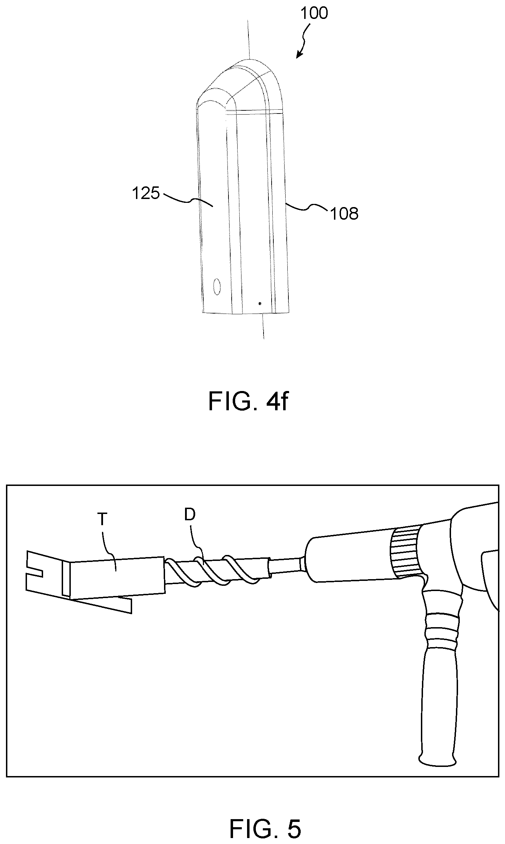

Drilling the hole 4 may be by using a tubular tool T (schematically shown in fig. 5) that i) defines the angle α, ii) is temporarily fixed to one of the building surfaces 2, 3 and iii) through which the drill D is run. Different such tools T defining each a particular angle α may be used.

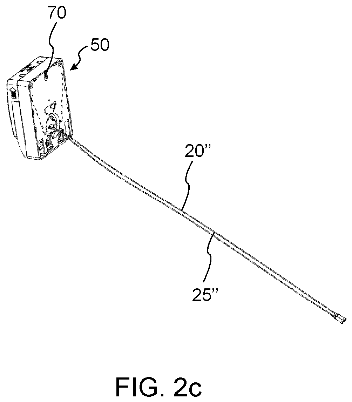

As a second step the technician then releases the aforementioned second length 20", 25" of the respective cables 20, 25 from the first component 50, as shown in fig. 2c, and inserts this second length 20", 25" into the tubular third component 150 via its open first end 155, as shown in fig. 3a, threading the second lengths 20", 25" through the length of the third component 150 by moving the third component 150 towards the opening 85 formed in the rear part 80 of the casing 90. The first end 155 is then inserted into the opening 85, as shown in fig. 3b.

The length of the third tubular component 150 is preferably selected at the production level to essentially correspond to the second length 20", 25" of the cables 20, 25 such that at the point in time shown in fig. 3b the first lengths 20', 25' remain wound up inside the first component 50 in the figure eight/8 configuration, with the second end of the cables 20, 25, whether or not having connectors 21, 26, being located inside the third component 150 adjacent to its second end 160.

The opening 85 of the casing 90 includes a socket part 87 of a ball and socket joint which serves to connect the first end 155 of the third component 150 to the casing 90 at an adjustable angle. Alternatively, the casing 90 and the first end 155 may be configured such that rotation is possible only about one axis, preferably about an axis perpendicular to the longitudinal extension of the third component 150.

Specifically, in the shown embodiment the first and also the second component 50, 100 is configured for engaging the third component 150 such that the latter may be adjusted to be received in a hole 4 extending at an angle α to the horizontal and at an angle to a vertical plane, i.e. with the third component 150 extending in a corresponding angle relative to the outer face of the rear part 80, chosen within a certain value range. It is preferred, as discussed below, to establish an engagement between the first component 50 and the third, tubular component 150 such that the first component 50 cannot readily be removed from the third component 150.

To allow the first component 50 to be mounted flatly against the inside surface 2, with the third tubular component 150 extending at the aforementioned angle α in the hole 4, the aforementioned ball and socket joint is provided, with the socket part 87 arranged in the opening 85 of the rear part 80 of the first component 50, and with a ball part 156 fixed to the first end 155 of the third component 150. The socket part 87 has a curved face portion against which the ball part 155 rides. This is seen best in the very simple embodiment illustrated schematically in figs. 3d which shows the ball part 156 having a throughgoing aperture 157 allowing the cables 20, 25 to be inserted into the hollow third tubular component 150 in the manner described above. The ball and socket joint connection allows the third tubular component 150 to be turned relative to the first component 50 to which it is connected.

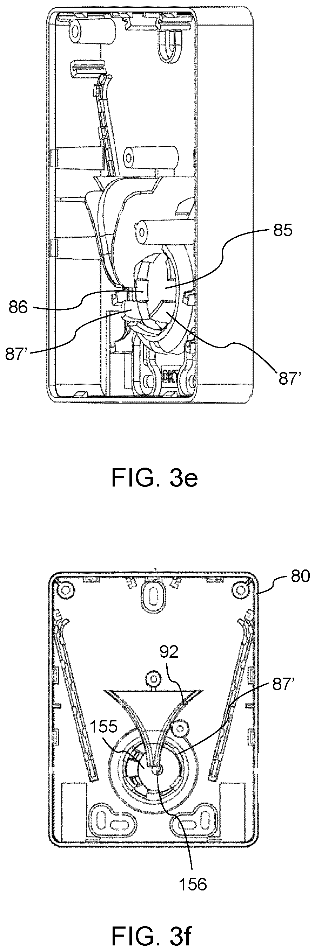

A connector element 170 may in one embodiment be provided on the third component 150 to enable the technician to readily connect the third component 150 to the first casing 90, once the ball part 155 has been received by the socket part 87, to thereby prevent subsequent withdrawal of the third component 150 out of the casing 90. The connector element 170 may as shown in fig. 3b be formed as a slidable ring-shaped member engaging the rear of the ball part 155 and having locking tabs 171 engaging the casing 90. Alternatively, for the same purpose of preventing release of the third component 150 from the casing 90, flexible tabs 86 may as shown in fig. 3e be arranged along the periphery of the opening 85 whereby the tabs 86 flex to allow insertion of the ball part 156 into the socket part 87, and then return to their initial position to engage the rear of the ball part 156.

The ball part 156 may by way of example only be defined by a hollow, spherical or roughly spherical body having the throughgoing aperture 157, as seen in fig. 3d, or as a hemispherical body as shown in fig. 3a. The socket part 87 may only enclose a portion of the ball part 155, and may be defined by a plurality of tabs 88, seen best in figs. 3e and 3f, each providing a curved face portion of the socket part 87, against which socket part 87 the ball part 155 rides. Fig. 3f shows the ball part 156 received by the socket part 87 and turned upwards and sideways to allow for the aforementioned angular adjustment into the angles α, β. Fig. 3f also shows a funnel-shaped guide 92 arranged on the inside face of the rear part 80, serving to guide the second length 20', 25' of the cables 20, 25 if pulled out from inside the casing 90 through the aperture 157 of the ball part 156 during a final next step of the installation to be discussed further below.

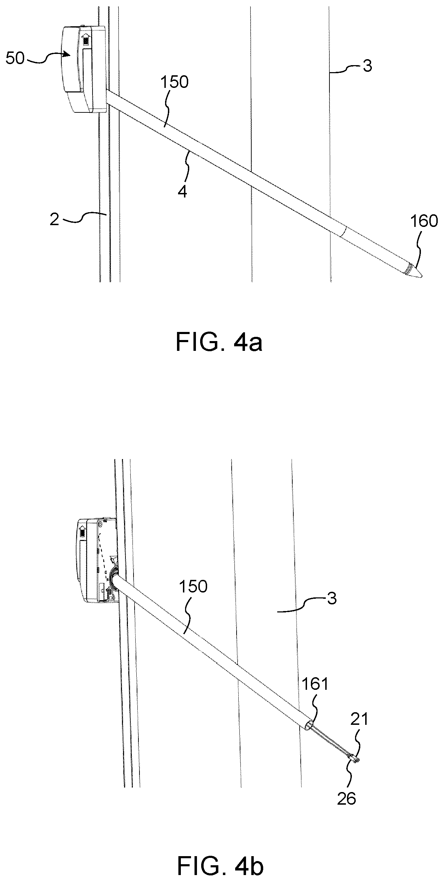

As a third step of the installation the technician will now insert the third component connected to the first component 50 into the hole 4, such that the second end 160 exits the hole 4 on the outside of the wall 1. During this time the entire second length of the cables 20, 25, including any second end connectors 21, 26, are received in a protected environment inside the third tubular component 150, until access to the second end of the cables 20, 25 is eventually needed for connecting the cables 20, 25 to the second component 100, as described further below. The technician will advance the third component 150 until the base 80 of the first component 50 contacts the inside surface 2 of the wall 1, and then mount the first component 50 to the inside surface 2 by screws or similar fastening means extending through mounting holes 51. Installation has by then progressed to the point shown in fig. 4a.

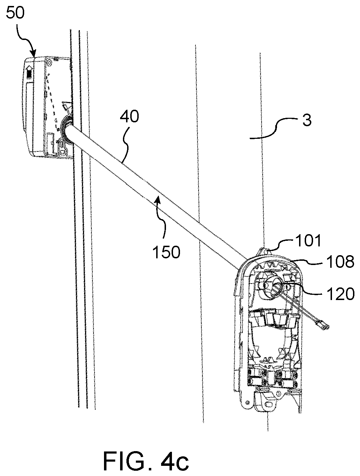

The technician now as a fourth step introduces the second end 162 of the third component 150 through an opening 120 in a base part 108 of the second component 100, as shown in fig. 4c. For this the opening 120 preferably defines a passage extending at an angle corresponding to the aforementioned angle α. The base part 108 is slid up along the third component 150 until it rests against the outside surface 3 of the wall 1, and is then secured to the wall 1 by means of eg. screws passing through apertures 110 formed in the base part 108.

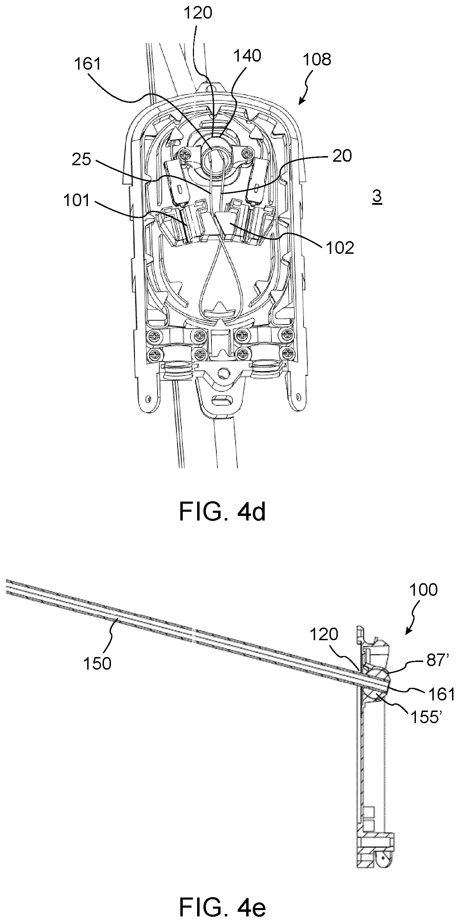

The technician then as a fifth step breaks off a portion 165 of suitable length of the third tubular component 150, which may for this purpose include frangible areas 161', and slides that portion 165 along the short inside length of the cable 20, 25. After removal of that portion 165 the third tubular portion 150 then appears with free end 161, exposing thereby the second ends of the cables 20, 25, as also shown in fig. 4b where for illustrative purposes the second component 100 has not be shown. The technician may at this time choose to mount a ball 156' with a throughgoing aperture to the third component 150 at its free end 161, which then is received by any socket part 87' in the manner shown in fig. 4e.

At this time the technician may to complete the installation need to pull out a further length of the cable(s) 20, 25 to carry out the connection of the cables 20, 25 to the second component 100, and such a further length is available as the aforementioned first lengths 20', 25' of the cables 20, 25 held inside the first component 50, which further length conveniently may be drawn out from the tubular third component 150 without giving rise to any torsion due to the figure eight/8 winding in the first component 50 and without damage to the cables 20, 25 where they pass into the third component 150 at the first end 155 thereof. This allows the technician to mount connectors 21, 26, where required, to be connected to terminal connectors 101, 102 within the second component 100, as shown in fig. 4d. A protective cover 125 may then be mounted to the base part 108 of the second component 100, as shown in fig. 4f.

The base part 108 of the second component 100 may include injection ports (not shown) for injecting a sealant into any space between the base part 108 and the wall surface 3.

Where the third component 150, that may be a flexible, wound up tube, has a length that is considered to be excessively long the technician may already at the aforementioned first step of the installation cut the third component 150 to have an appropriate length. It is also noted that the ball part 156 at the first end 155 of the third component 150 may be mounted to the third component 150 by the technician before or at any of the aforementioned first, second or third steps of the installation.

For the second component 100 a ball and socket joint connection similar to the one discussed above and having similar components 87', 156' may be formed, as shown schematically in fig. 4e. Alternatively, the second component 100 casing 108 and the second end 160 may be configured such that mutual rotation is possible only about one axis, preferably an axis perpendicular to the longitudinal extension of the third component 150.

The ball and socket joint structures discussed above generally allow the third tubular component 150 to be turned freely in many directions relative to the components 50, 100 to which it is connected.

## Claims

1. A kit (10) for installing one or more cables (20, 25) through a hole (4) in a building wall (1), said kit (10) including:
- a first component (50),
- a second component (100) and
- a hollow tubular third component (150),
wherein said one or more cables (20, 25) are to extend from the first component (50) to the second component (100) inside the third component (150) extending along the length of said hole (4),
- said first and second component (50, 100) each being configured for being mounted onto a respective one of two opposite surfaces (2, 3) of the wall (1), adjacent a respective end of said hole (4), each including a casing (90, 108) and being configured for being connected to a respective end of said cable(s) (20, 25), such as via terminal connectors mounted inside said casings (90, 108),
- - said casing (90) of said first component (50) having an opening (85),
- - said casing (108) of said second component (100) having an opening (120) for said third component (150),
- said first component (50) including at least a length (20", 25") of said cable(s) (20, 25),
- said first component (50) and said third component (150) having parts (86, 156) configured for rotatably connecting said first component (50) to a first end (155) of said third component (150) at said opening of said casing (90) of said first component (50),
- said length (20", 25") of said cable (20, 25) being configured to be receivable by said third component (150) and to extend inside said third component (150) when rotatably connected to said first component (50),
- said length (20", 25") being arranged in a wound up configuration and to be unwound for being received by said third component (150).

2. The kit (10) of the previous claim, said length (20", 25") of the cable(s) (20, 25) having connector(s) (21, 26) for connection with terminal connectors inside said casing (108) of said second component (100).

3. The kit (10) of any of the previous claims, said first component (50) and said first end (155) of said third component (150) having parts (86, 156) configured to form together a ball and socket joint (86, 156) rotatably connecting said first component (50) to said third component (150).

4. The kit (10) of the previous claim, said casing (90) of said first component (50) including a socket part (87) of said joint and said first end (155) including a ball part (156) of said joint.

5. The kit (10) of any of the previous claims, said second component (100) and said third component (150) having parts (87', 156') configured for rotatably connecting said second component (100) to a second end (160) of said third component (150) at said opening (120) of said casing (108) of said second component (100).

6. The kit (10) of the previous claim, said casing (108) of said second component (100) including a socket part (87') of a ball and socket joint, said second end (161) of said third component (150) including a ball part (156') for engaging said socket part (87') of said casing (108) of said second component (100).

7. The kit (10) of any of claims 1-2, said rotatable connection being configured such that rotation is possible only about an axis perpendicular to the longitudinal extension of said third component (150).

8. The kit (10) of any of the previous claims, said first component (50) including a further length (20', 25') of said cable(s) (20, 25) wound up in a figure eight configuration inside said casing (90) of said first component (50) and configured to be at least partially received by said third component (150).

9. A method of installing the kit (10) according to any of the previous claims, comprising the steps of:
- drilling a hole (4) through a wall (1), from inside or outside a building, preferably such that the hole (4) extends at such an angle (α) to the horizontal that an end of the hole (4) at an outside surface (3) of the wall (1) is at a lower horizontal level than the other end of the hole (4) at the inside surface (2) of the wall (1),
- inserting said length (20", 25") of said cable(s) (20, 25) into said tubular third component 150 at said first end (155),
- connecting said third component (150) to said first component (50),
- inserting said third component (150) into said drilled hole (4) at one side of said wall (1), such that a second end (160) of said third component (150) exits the hole (4) at the other side of said wall (1),
- inserting said second end (162) into said opening (120) of the second component (100),
- optionally connecting said third component (150) to said second component (100),
- removing a portion (165) of the third tubular component (150) to thereby expose an end of said cable(s) (20, 25), and
connecting said exposed end(s) of said cable(s) (20, 25) to said second component (100).

10. The method of the previous claim, when dependent on claim 8, comprising the step of manually pulling said exposed end(s) to introduce at least a portion of said further length (20', 25') of said cable(s) (20, 25) into said third tubular component (150).

## Patentansprüche

1. Kit (10) zum Installieren eines oder mehrerer Kabel (20, 25) durch ein Loch (4) in einer Gebäudewand (1), wobei das Kit (10) Folgendes beinhaltet:
- eine erste Komponente (50),
- eine zweite Komponente (100) und
- eine hohle, rohrförmige dritte Komponente (150),
wobei das eine oder die mehreren Kabel (20, 25) dazu dienen, sich von der ersten Komponente (50) zu der zweiten Komponente (100) innerhalb der dritten Komponente (150), die sich entlang der Länge des Lochs (4) erstreckt, zu erstrecken,
- wobei die erste und die zweite Komponente (50, 100) jeweils dazu konfiguriert sind, auf eine jeweilige von zwei gegenüberliegenden Flächen (2, 3) der Wand (1) benachbart zu einem jeweiligen Ende des Lochs (4) montiert zu werden, wobei jede ein Gehäuse (90, 108) beinhaltet und dazu konfiguriert ist, mit einem jeweiligen Ende des/der Kabel(s) (20, 25) verbunden zu werden, wie etwa über Anschlussklemmen, die innerhalb der Gehäuse (90, 108) montiert sind,
-- wobei das Gehäuse (90) der ersten Komponente (50) eine Öffnung (85) aufweist,
-- wobei das Gehäuse (108) der zweiten Komponente (100) eine Öffnung (120) für die dritte Komponente (150) aufweist,
- wobei die erste Komponente (50) mindestens eine Länge (20", 25") des/der Kabel(s) (20, 25) beinhaltet,
- wobei die erste Komponente (50) und die dritte Komponente (150) Teile (86, 156) aufweisen, die dazu konfiguriert sind, die erste Komponente (50) mit einem ersten Ende (155) der dritten Komponente (150) an der Öffnung des Gehäuses (90) der ersten Komponente (50) drehbar zu verbinden,
- wobei die Länge (20", 25") des Kabels (20, 25) dazu konfiguriert ist, durch die dritte Komponente (150) aufnehmbar zu sein und sich innerhalb der dritten Komponente (150) zu erstrecken, wenn sie drehbar mit der ersten Komponente (50) verbunden ist,
- wobei die Länge (20", 25") in einer aufgewickelten Konfiguration angeordnet ist und abzuwickeln ist, um durch die dritte Komponente (150) aufgenommen zu werden.

2. Kit (10) nach dem vorherigen Anspruch, wobei die Länge (20", 25") des/der Kabel(s) (20, 25) (einen) Verbinder (21, 26) zur Verbindung mit Anschlussklemmen innerhalb des Gehäuses (108) der zweiten Komponente (100) aufweist/aufweisen.

3. Kit (10) nach einem der vorherigen Ansprüche, wobei die erste Komponente (50) und das erste Ende (155) der dritten Komponente (150) Teile (86, 156) aufweisen, die dazu konfiguriert sind, gemeinsam ein Kugelgelenk (86, 156) zu bilden, das die erste Komponente (50) mit der dritten Komponente (150) drehbar verbindet.

4. Kit (10) nach dem vorherigen Anspruch, wobei das Gehäuse (90) der ersten Komponente (50) einen Buchsenteil (87) des Gelenks beinhaltet und das erste Ende (155) einen Kugelteil (156) des Gelenks beinhaltet.

5. Kit (10) nach einem der vorherigen Ansprüche, wobei die zweite Komponente (100) und die dritte Komponente (150) Teile (87', 156') aufweisen, die dazu konfiguriert sind, die zweite Komponente (100) mit einem zweiten Ende (160) der dritten Komponente (150) an der Öffnung (120) des Gehäuses (108) der zweiten Komponente (100) drehbar zu verbinden.

6. Kit (10) nach dem vorherigen Anspruch, wobei das Gehäuse (108) der zweiten Komponente (100) einen Buchsenteil (87') eines Kugelgelenks beinhaltet, wobei das zweite Ende (161) der dritten Komponente (150) einen Kugelteil (156') zum Eingreifen in den Buchsenteil (87') des Gehäuses (108) der zweiten Komponente (100) beinhaltet.

7. Kit (10) nach einem der Ansprüche 1-2, wobei die drehbare Verbindung derart konfiguriert ist, dass eine Drehung nur um eine Achse möglich ist, die senkrecht zu der Längserstreckung der dritten Komponente (150) verläuft.

8. Kit (10) nach einem der vorherigen Ansprüche, wobei die erste Komponente (50) eine weitere Länge (20', 25') des/der Kabel(s) (20, 25) beinhaltet, die in einer Konfiguration einer Acht innerhalb des Gehäuses (90) der ersten Komponente (50) aufgewickelt und dazu konfiguriert ist, mindestens teilweise durch die dritte Komponente (150) aufgenommen zu werden.

9. Verfahren zum Installieren des Kits (10) gemäß einem der vorherigen Ansprüche, umfassend die folgenden Schritte:
- Bohren eines Lochs (4) durch eine Wand (1), von innerhalb oder außerhalb eines Gebäudes, bevorzugt derart, dass sich das Loch (4) in einem derartigen Winkel (α) zur Horizontalen erstreckt, dass sich ein Ende des Lochs (4) an einer Außenfläche (3) der Wand (1) auf einem niedrigeren horizontalen Niveau befindet als das andere Ende des Lochs (4) an der Innenfläche (2) der Wand (1),
- Einführen der Länge (20", 25") des/der Kabel(s) (20, 25) in die rohrförmige dritte Komponente 150 an dem ersten Ende (155),
- Verbinden der dritten Komponente (150) mit der ersten Komponente (50),
- Einführen der dritten Komponente (150) in das gebohrte Loch (4) auf einer Seite der Wand (1), sodass ein zweites Ende (160) der dritten Komponente (150) aus dem Loch (4) auf der anderen Seite der Wand (1) austritt,
- Einführen des zweiten Endes (162) in die Öffnung (120) der zweiten Komponente (100),
- optionales Verbinden der dritten Komponente (150) mit der zweiten Komponente (100),
- Entfernen eines Abschnitts (165) der dritten rohrförmigen Komponente (150), um dadurch ein Ende des/der Kabel(s) (20, 25) freizulegen, und Verbinden des/der freigelegten Endes/Enden des/der Kabel(s) (20, 25) mit der zweiten Komponente (100).

10. Verfahren nach dem vorherigen Anspruch, wenn von Anspruch 8 abhängig, umfassend den Schritt des manuellen Ziehens des/der freigelegten Endes/Enden, um mindestens einen Abschnitt der weiteren Länge (20', 25') des/der Kabel(s) (20, 25) in die dritte rohrförmige Komponente (150) einzubringen.

## Revendications

1. Kit (10) pour l'installation d'un ou plusieurs câbles (20, 25) à travers un trou (4) dans un mur de bâtiment (1), ledit kit (10) comprenant :
- un premier composant (50),
- un deuxième composant (100) et
- un troisième composant tubulaire creux (150),
dans lequel lesdits un ou plusieurs câbles (20, 25) doivent s'étendre du premier composant (50) au deuxième composant (100) à l'intérieur du troisième composant (150) s'étendant le long dudit trou (4),
- lesdits premier et deuxième composants (50, 100) étant chacun configurés pour être montés sur l'une de deux surfaces opposées (2, 3) du mur (1), adjacentes à une extrémité respective dudit trou (4), chacun comprenant un boîtier (90, 108) et étant configurés pour être connectés à une extrémité respective dudit ou desdits câbles (20, 25), tel que via des connecteurs terminaux montés à l'intérieur desdits boîtiers (90, 108),
-- ledit boîtier (90) dudit premier composant (50) comportant une ouverture (85),
-- ledit boîtier (108) dudit deuxième composant (100) comportant une ouverture (120) pour ledit troisième composant (150),
- ledit premier composant (50) comprenant au moins une longueur (20", 25") dudit ou desdits câbles (20, 25),
- ledit premier composant (50) et ledit troisième composant (150) comportant des parties (86, 156) configurées pour relier de manière rotative ledit premier composant (50) à une première extrémité (155) dudit troisième composant (150) au niveau de ladite ouverture dudit boîtier (90) dudit premier composant (50),
- ladite longueur (20", 25") dudit câble (20, 25) étant configurée pour pouvoir être reçue par ledit troisième composant (150) et pour s'étendre à l'intérieur dudit troisième composant (150) lorsqu'elle est connectée de manière rotative audit premier composant (50),
- ladite longueur (20", 25") étant agencée dans une configuration enroulée et destinée à être déroulée pour être reçue par ledit troisième composant (150).

2. Kit (10) selon la revendication précédente, ladite longueur (20", 25") du ou des câbles (20, 25) comportant un ou des connecteurs (21, 26) pour la connexion avec des connecteurs terminaux à l'intérieur dudit boîtier (108) dudit deuxième composant (100).

3. Kit (10) selon l'une quelconque des revendications précédentes, ledit premier composant (50) et ladite première extrémité (155) dudit troisième composant (150) comportant des parties (86, 156) configurées pour former ensemble une articulation à rotule (86, 156) reliant de manière rotative ledit premier composant (50) audit troisième composant (150).

4. Kit (10) selon la revendication précédente, ledit boîtier (90) dudit premier composant (50) comprenant une partie de douille (87) dudit joint et ladite première extrémité (155) comprenant une partie rotule (156) dudit joint.

5. Kit (10) selon l'une quelconque des revendications précédentes, ledit deuxième composant (100) et ledit troisième composant (150) comportant des parties (87', 156') configurées pour relier de manière rotative ledit deuxième composant (100) à une deuxième extrémité (160) dudit troisième composant (150) au niveau de ladite ouverture (120) dudit boîtier (108) dudit deuxième composant (100).

6. Kit (10) selon la revendication précédente, ledit boîtier (108) dudit deuxième composant (100) comprenant une partie de douille (87') d'une articulation à rotule, ladite deuxième extrémité (161) dudit troisième composant (150) comprenant une partie de rotule (156') destinée à s'engager dans ladite partie de douille (87') dudit boîtier (108) dudit deuxième composant (100).

7. Kit (10) selon l'une quelconque des revendications 1 à 2, ladite connexion rotative étant configurée de telle sorte que la rotation n'est possible qu'autour d'un axe perpendiculaire à l'extension longitudinale dudit troisième composant (150).

8. Kit (10) selon l'une quelconque des revendications précédentes, ledit premier composant (50) comprenant une longueur supplémentaire (20', 25') dudit ou desdits câbles (20, 25) enroulés dans une configuration en huit à l'intérieur dudit boîtier (90) dudit premier composant (50) et configurés pour être au moins partiellement reçus par ledit troisième composant (150).

9. Procédé d'installation du kit (10) selon l'une quelconque des revendications précédentes, comprenant les étapes consistant à :
- percer un trou (4) à travers un mur (1), depuis l'intérieur ou l'extérieur d'un bâtiment, de préférence de telle sorte que le trou (4) s'étende à un angle (α) par rapport à l'horizontale de telle sorte qu'une extrémité du trou (4) au niveau d'une surface extérieure (3) du mur (1) soit à un niveau horizontal inférieur à l'autre extrémité du trou (4) au niveau de la surface intérieure (2) du mur (1),
- insérer ladite longueur (20", 25") dudit ou desdits câbles (20, 25) dans ledit troisième composant tubulaire 150 à ladite première extrémité (155),
- connecter ledit troisième composant (150) audit premier composant (50),
- insérer ledit troisième composant (150) dans ledit trou percé (4) d'un côté dudit mur (1), de sorte qu'une seconde extrémité (160) dudit troisième composant (150) sorte du trou (4) de l'autre côté dudit mur (1),
- insérer ladite seconde extrémité (162) dans ladite ouverture (120) du second composant (100),
- connecter éventuellement ledit troisième composant (150) audit deuxième composant (100),
- retirer une partie (165) du troisième composant tubulaire (150) pour exposer ainsi une extrémité dudit ou desdits câbles (20, 25), et
connecter ladite ou lesdites extrémités exposées dudit ou desdits câbles (20, 25) audit deuxième composant (100).

10. Procédé selon la revendication précédente, lorsqu'elle dépend de la revendication 8, comprenant l'étape consistant à tirer manuellement ladite ou lesdites extrémités exposées pour introduire au moins une partie de ladite longueur supplémentaire (20', 25') dudit ou desdits câbles (20, 25) dans ledit troisième composant tubulaire (150).
